# EUROPÄISCHE PATENTSCHRIFT

(11) **EP 3 003 689 B1**
(45) Veröffentlichungstag und Bekanntmachung des Hinweises auf die Patenterteilung: **20.03.2019**
(21) Anmeldenummer: 14724035.2
(22) Anmeldetag: 30.04.2014
(51) Int. Cl.: B29C 65/18, B29C 65/78, B29C 65/74, B65B 51/32, B65B 1/02, B65B 7/02

(54) **BODENSIEGELSTATION FÜR DIE ERZEUGUNG EINER BODENSIEGELNAHT SOWIE DARAUF BEZOGENES VERFAHREN**
BASE SEALING STATION FOR GENERATING A BASE SEAL SEAM AND RELATED METHOD
POSTE DE SCELLAGE DE FOND DE CONTENANT PERMETTANT DE GÉNÉRER UN JOINT DE SCELLAGE DE FOND DE CONTENANT ET PROCÉDÉ ASSOCIÉ

(30) Priorität: 31.05.2013 DE 102013105601
(43) Veröffentlichungstag der Anmeldung: 13.04.2016
(73) Patentinhaber: Windmöller & Hölscher KG, 49525 Lengerich (DE)
(72) Erfinder: VOß, Hans-Ludwig, 49545 Tecklenburg (DE); HUIL, Oliver, 48477 Hörstel (DE); UDALLY, Ralf, 48145 Münster (DE); GROßE-HEITMEYER, Rüdiger, 49492 Westerkappeln (DE); UHLMANN, Pascal, 49545 Tecklenburg (DE)
(86) Internationale Anmeldenummer: PCT/EP2014/058900
(87) Internationale Veröffentlichungsnummer: WO 2014/206604

(56) Entgegenhaltungen:
- WO-A1-00/23327
- WO-A1-2010/111325
- BE-A1- 883 828
- US-A1- 2004 139 701

## Beschreibung

Die vorliegende Erfindung betrifft eine Bodensiegelstation für die Erzeugung einer Bodensiegelnaht in einer Folienbahn in einer Sackfüllanlage sowie ein Verfahren für die Herstellung einer Bodensiegelnaht in einer Folienbahn in einer Sackfüllanlage.

Es ist grundsätzlich bekannt, dass in Sackfüllanlagen Bodensiegelstationen vorgesehen werden. Diese Bodensiegelstationen dienen dazu, in einer Folienbahn, welche z. B. als Schlauchfolie ausgebildet ist, eine Bodensiegelnaht zu erzeugen. Hierfür sind in bekannter Weise eine Siegelvorrichtung mit zwei Siegelbacken und zumindest eine Klemmvorrichtung vorgesehen. Die Klemmvorrichtung dient dazu, die Folienbahn in gewünschter Position zu klemmen und dementsprechend vorzugsweise straff zu ziehen. Die Siegelbacken der Siegelvorrichtung fahren anschließend an die Folienbahn heran und drücken mit erhitzten Siegelbacken die beiden Folienhälften der Folienbahn aneinander. Durch Aufschmelzen des Materials erfolgt ein Versiegeln und damit Ausbilden der Bodensiegelnaht.

Bei bekannten Bodensiegelstationen kann es vorkommen, dass während des Siegelverfahrens auch an der Außenseite der Folienbahn das Material aufgeschmolzen wird. Dieses Aufschmelzen kann dazu führen, dass anschließend ein Verkleben oder ein teilweises Verkleben der jeweiligen Siegelbacke mit der Folienbahn erfolgt. Dies ist jedoch aufzuheben, um sicherzustellen, dass beim anschließenden Weitertransport ein Festkleben vermieden wird. Andernfalls könnte es zu Faltenwurf in der Folienbahn oder sogar zu einer falschen Positionierung für nachfolgende Stationen kommen. Bei bekannten Bodensiegelstationen wird dies durch die bewegbare Ausbildung beider Siegelbacken gewährleistet, sodass nach dem Siegelvorgang beide Siegelbacken senkrecht von der Folienbahn wegfahren und damit öffnen können. Auf diese Weise wird aktiv die jeweilige Siegelbacke von der Folienbahn beabstandet und sozusagen auch in verklebender Situation abgezogen und die Verklebestelle damit aufgehoben. Eine solche doppelte Bewegbarkeit beider Siegelbacken ist jedoch nachteilig, da sie mit erhöhter Komplexität hinsichtlich der Konstruktion verbunden ist. Auch muss mehr Bauraum innerhalb der Sackfüllanlage für die doppelte Bewegbarkeit zur Verfügung gestellt werden. Nicht zuletzt ist auch mit erhöhten Kosten durch den Einsatz von zwei beweglichen Siegelbacken zu rechnen. Eine Sackfüllanlage mit einer Bodensiegelstation für die Erzeugung einer Bodensiegelnaht in einer Folienbahn ist beispielsweise aus WO2010/111325A1 bekannt. Es ist Aufgabe der vorliegenden Erfindung, die voranstehend beschriebenen Nachteile zumindest teilweise zu beheben. Insbesondere ist es Aufgabe der vorliegenden Erfindung, in kostengünstiger und einfacher Weise die Siegelstation auszubilden und ein Festkleben zu vermeiden oder zumindest das Risiko des Verklebens zu reduzieren.

Voranstehende Aufgabe wird gelöst durch eine Bodensiegelstation mit den Merkmalen des Anspruchs 1 und ein Verfahren mit den Merkmalen des Anspruchs 11. Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen Bodensiegelstation beschrieben sind, selbstverständlich auch im Zusammenhang mit dem erfindungsgemäßen Verfahren und jeweils umgekehrt, sodass bzgl. der Offenbarung zu den einzelnen Erfindungsaspekten stets wechselseitig Bezug genommen wird bzw. werden kann.

Eine erfindungsgemäße Bodensiegelstation dient der Erzeugung einer Bodensiegelnaht in einer Folienbahn einer Sackfüllanlage. Hierfür weist die Bodensiegelstation eine Siegelvorrichtung und zumindest eine Klemmvorrichtung auf. Eine erfindungsgemäße Bodensiegelstation zeichnet sich dadurch aus, dass die Siegelvorrichtung eine stationäre erste Siegelbacke und eine relativ zur ersten Siegelbacke bewegbare zweite Siegelbacke aufweist. Weiter weist eine erfindungsgemäße Bodensiegelstation eine Klemmvorrichtung auf, welche mit einer bewegbaren ersten Klemmbacke und mit einer bewegbaren zweiten Klemmbacke für das Klemmen der Folienbahn ausgestattet ist. Dabei beaufschlagt eine Federvorrichtung die erste Klemmbacke in Richtung der zweiten Klemmbacke mit einer Federkraft und die erste Klemmbacke ist näher an der Folienbahn durch die Federvorrichtung positioniert, als die erste Siegelbacke angeordnet ist.

Eine erfindungsgemäße Bodensiegelstation unterscheidet sich in entscheidender Weise von bekannten Bodensiegelstationen dadurch, dass die erste Siegelbacke stationär ausgebildet ist. Diese stationäre Ausbildung ist insbesondere in Relation zu Bauteilen, z. B. einen Stationsrahmen, zu verstehen. Mit anderen Worten erfolgt während des gesamten Prozesses keine Bewegung dieser ersten stationär ausgebildeten Siegelbacke. Im Vergleich zu bekannten Bodensiegelstationen muss also nur noch die zweite Siegelbacke bewegt werden, sodass der konstruktive Aufwand für die Bewegung und der Antrieb für diese Bewegung auch nur einmal für diese zweite Siegelbacke vorgesehen werden muss. Auf diese Weise kann eine Kostenreduktion und vor allem auch eine Komplexitätsreduktion für eine erfindungsgemäße Bodensiegelstation erreicht werden.

Um sicherzustellen, dass trotz der stationär ausgebildeten ersten Siegelbacke auch ein Verkleben an der Siegelbacke den weiteren Prozessablauf nicht stört, ist die Klemmvorrichtung in erfindungsgemäßer Weise ausgebildet. Diese weist dementsprechend eine Federvorrichtung auf, welche die erste Klemmbacke in Richtung der zweiten Klemmbacke mit einer Federkraft beaufschlagt. Gleichzeitig positioniert die Federvorrichtung die erste Klemmbacke über die erste Siegelbacke hinaus, sodass die Klemmbacke in Richtung der Folienbahn über die erste Siegelbacke hinausragt.

Durch den Transportweg der Folienbahn durch die Bodensiegelstation hindurch wird eine Förderstrecke definiert, entlang welcher die Folienbahn im Normalbetrieb verläuft. In diesem Normalbetrieb wird die Folienbahn sehr nah an der ersten Klemmbacke entlanggeführt. Durch die erfindungsgemäße Positionierung der ersten Klemmbacke bestehen dementsprechend in einer Normalsituation ein geringerer Abstand zwischen der ersten Klemmbacke und der Folienbahn und ein größerer Abstand zwischen der ersten Siegelbacke und der Folienbahn. Mit anderen Worten ist die erste Siegelbacke von der Folienbahn weiter zurückgesetzt als die erste Klemmbacke.

Bei der Durchführung des Siegelvorgangs wird zuerst die Klemmvorrichtung für das Klemmen der Folienbahn geschlossen. Hierfür bewegt sich die zweite Klemmbacke auf die erste Klemmbacke zu und gelangt dabei auf der gegenüberliegenden Seite in Kontakt mit der Folienbahn. Durch die zweite Klemmbacke wird die Folienbahn gegen die erste Klemmbacke gedrückt und bewegt sich gemeinsam mit den beiden Klemmbacken gegen die Federvorrichtung aus der Förderstrecke heraus. In einer seitlichen Ansicht kann dies mit einer Bewegung, z. B. nach links, beschrieben werden. Mit anderen Worten bewegt sich die gesamten Klemmvorrichtung mit den beiden geschlossenen Klemmbacken und damit auch die eingeklemmte Folienbahn aus der ursprünglichen Förderstrecke heraus und reduziert damit den Abstand zur ersten Siegelbacke, bis dieser nahezu Null erreicht hat. Anschließend kann die Siegelvorrichtung gestartet werden und die zweite Siegelbacke fährt auf die Folienbahn zu. Die Siegelbacken schließen sich, indem ausschließlich die zweite Siegelbacke komplett bis zur ersten Siegelbacke bewegt wird und damit der Siegelvorgang durch beidseitiges Kontaktieren der Folienbahn durch die beiden Siegelbacken gewährleistet werden kann.

Erfindungsgemäß sind die erste Siegelbacke und die zweite Siegelbacke dabei auf unterschiedlichen Seiten der Folienbahn angeordnet. Gleiches gilt dementsprechend auch für die Anordnung der beiden Klemmbacken, sodass die erste Klemmbacke und die zweite Klemmbacke auf zwei unterschiedlichen Seiten der Folienbahn angeordnet sind. Vorzugsweise sind die erste Klemmbacke und die erste Siegelbacke auf der gleichen Seite zur Folienbahn angeordnet.

Erfindungsgemäß wird also nun die Folienbahn auf die erste Siegelbacke zubewegt und nicht mehr, wie dies im Stand der Technik bekannt ist, eine Bewegung beider Siegelbacken durchgeführt. Damit wird erreicht, dass ein komplettes Schließen der Siegelvorrichtung für die Durchführung des Siegelvorgangs erzielt werden kann. Jedoch kann beim anschließenden Öffnen der Siegelvorrichtung ein potentielles Verkleben zwischen der ersten Siegelbacke und der Folienbahn durch eine Reversion der Schließbewegung der Klemmvorrichtung vermieden werden. So öffnet die zweite Siegelbacke und bewegt sich von der ersten Siegelbacke weg und verlässt damit die kontaktierende Position zur Folienbahn. Ein eventuelles Verkleben zwischen zweiter Siegelbacke und Folienbahn reißt an dieser Stelle ab. Anschließend öffnet die Klemmvorrichtung, indem die zweite Klemmbacke aktiv von der ersten Klemmbacke wegbewegt wird. Dabei lösen sich die beiden Klemmbacken jedoch noch nicht sofort voneinander, sondern vielmehr wird die Federvorrichtung langsam entspannt. Durch diese Konträrbewegung bewegt sich dementsprechend auch die Folienbahn konträr und damit von der ersten Siegelbacke weg. Diese aktive Wegbewegung der Folienbahn von der ersten Siegelbacke ist nun in der Lage, ebenfalls möglicherweise entstandene Verklebungen zwischen der ersten Siegelbacke und der Folienbahn aktiv zu beheben. Befindet sich die Folienbahn wieder auf der ursprünglichen Förderstrecke, so kann z. B. ein Anschlag eine Weiterbewegung der ersten Klemmbacke verhindern. Die Weiterbewegung der zweiten Klemmbacke öffnet die Klemmvorrichtung, sodass der Prozess der Erzeugung der Bodensiegelnaht beendet worden ist.

Ein entscheidender erfindungsgemäßer Vorteil wird also durch die stationäre erste Siegelbacke erzielt. Trotz reduzierter Komplexität in der Konstruktion und reduziertem Kostenaufwand für die Herstellung der Bodensiegelstation wird die gleiche oder sogar eine verbesserte Sicherheit für das Vermeiden eines Festklebens zwischen Folienbahn und den beiden Siegelbacken erzielt. Gleichzeitig ist für die Klemmvorrichtung ein nur minimaler erhöhter Aufwand durch das Vorsehen der Federvorrichtung notwendig. So reicht ein aktiver Antrieb der zweiten Klemmbacke aus, während die erste Klemmbacke sozusagen passiv ausschließlich von der Federvorrichtung vorgespannt wird. Die Bewegung, welche Kräfte benötigt, wird für die erste Klemmbacke ausschließlich durch Einwirken der Federvorrichtung in einer Richtung oder durch die zweite Klemmbacke in der anderen Richtung erzeugt.

Eine Sackfüllanlage ist im Sinne der vorliegenden Erfindung insbesondere eine Anlage gemäß eines Form-Fill-and-Seal(FFS)-Verfahrens. Hierbei wird ausgehend von einer Vorlagerolle eine Folienbahn kontinuierlich abgerollt, bei welcher es sich z. B. um eine Schlauchfolie handelt. Über eine Puffervorrichtung wird die Folienbahn einzelnen Bearbeitungsstationen zugeführt. Dies ist insbesondere die Bodensiegelstation, sodass nach der Puffervorrichtung ein taktweiser Vorschub erfolgen kann. Die Bodensiegelstation dient dazu, die Bodensiegelnaht in der Folienbahn für den jeweiligen Sackabschnitt zur Verfügung zu stellen. Dabei kann die Bodensiegelstation auch eine Schneidvorrichtung aufweisen, um ein Ablängen der einzelnen Sackabschnitte zur Verfügung zu stellen. Anschließend werden die einzelnen Sackabschnitte mit ausgebildeter Bodensiegelnaht, z. B. durch Greifersysteme, weitertransportiert und mithilfe eines Fülltrichters mit Schüttgut befüllt. Über eine finale Verschließstation mithilfe einer Kopfnahtsiegelstation erfolgt ein Verschließen der einzelnen befüllten Sackabschnitte, sodass abschließend über eine Kühlvorrichtung die Kopfnaht gekühlt und damit der gefüllte Sack finalisiert werden kann.

Unter einer Bewegung der Siegelbacken bzw. der Klemmbacken ist dabei grundsätzlich jede Form der Bewegung relativ zur anderen Backe bzw. relativ zu einem Stationsrahmen der Bodensiegelstation zu verstehen. So kann eine Bewegung als reine Translationsbewegung oder auch als reine Rotationsbewegung ausgebildet sein. Auch eine kombinierte Bewegung aus Translation und Rotation ist im Sinne der vorliegenden Erfindung denkbar.

Die Federvorrichtung kann in beliebiger Weise ausgebildet sein. So sind beispielsweise Rotationsfedern oder Spiralfedern als Federvorrichtung einsetzbar. Auch komplexere Ausbildungen, z. B. durch gleichgepolte Magnete, die dementsprechend eine Magnetkraft als Federkraft zur Verfügung stellen, sind im Rahmen der vorliegenden Erfindung denkbar. Die einzelnen Bauteile, insbesondere die einzelnen Klemmbacken, können z. B. aus Aluminium als Aluminiumleiste ausgebildet sein.

Es kann von Vorteil sein, wenn bei einer erfindungsgemäßen Bodensiegelstation diese Bodensiegelstation einen Stationsrahmen aufweist, an welchem die erste Siegelbacke stationär befestigt ist, die zweite Siegelbacke bewegbar gelagert ist, die Federvorrichtung sich abstützt, die erste Klemmbacke bewegbar gelagert ist und/oder die zweite Klemmbacke bewegbar gelagert ist. Damit kann ein solcher Stationsrahmen die Korrelation für die Bewegbarkeit bzw. die Abstützung oder die Befestigung des jeweiligen Bauteils ausbilden. Der Stationsrahmen kann dabei Teil eines Rahmens der gesamten Sackfüllanlage sein. Auch kann dieser Stationsrahmen Teil eines Gehäuses der Bodensiegelstation oder Teil eines Gehäuses der gesamten Sackfüllanlage sein. Dieser Stationsrahmen dient also dazu, einen Grundrahmen in mechanischer Hinsicht zu schaffen, relativ zu welchem eine Festlegung und damit eine Vermeidung von Bewegung oder eine definierte Auslegung einer Bewegung möglich wird. Die jeweiligen Lagervorrichtungen sind dabei an die jeweilige Bewegungsart, also an eine Translation, eine Rotation oder eine Mischung aus beiden Bewegungsarten, angepasst.

Ebenfalls von Vorteil ist es, wenn bei einer erfindungsgemäßen Bodensiegelstation die Bewegbarkeit der zweiten Siegelbacke, der ersten Klemmbacke und/oder der zweiten Klemmbacke translatorisch oder im Wesentlichen translatorisch ausgebildet ist. Eine vorzugsweise komplett translatorische Ausbildung der jeweiligen Bewegbarkeit führt zu reduzierter Komplexität der jeweiligen Lagervorrichtung. Auch handelt es sich dabei um eine einfacher zu berechnende und vor allem einfach auszuführende Bewegungsform. Gleichzeitig wird ein reduzierter Bauraum für die jeweilige Backe möglich.

Ebenfalls von Vorteil kann es sein, wenn bei einer erfindungsgemäßen Bodensiegelstation die Federvorrichtung eine Anschlagsvorrichtung mit wenigstens einem Anschlag für die Begrenzung der Bewegung der ersten Klemmbacke aufweist. Dabei kann die Anschlagsvorrichtung auch zwei oder mehr Anschläge vorsehen. Insbesondere bildet die Anschlagsvorrichtung einen Anschlag mit einem Widerlager gegen die Federkraft der Federvorrichtung. Somit wird eine Endposition der ersten Klemmbacke definiert, welche dementsprechend die erfindungsgemäße Korrelation zur finalen und damit stationären Position der ersten Klemmbacke mit sich bringt. Eine Anschlagsvorrichtung, welche durch das Zusammendrücken der Federvorrichtung erreicht wird, lässt vorzugsweise ausreichenden Bewegungsspielraum zu, um ausreichend weit die erste Klemmbacke einfedern zu können. Ausreichend weites Einfedern ist dabei insbesondere eine Bewegung, welche die erste Klemmbacke relativ zur Position der ersten Siegelbacke genau gleich weit oder sogar noch weiter gegen die Federvorrichtung zurückführen lässt. Hier wird ersichtlich, dass insbesondere ein Anschlag für eine Abstützung der Federkraft deutlich wichtiger und vorteilhafter ist als in der entgegengesetzten Richtung. In der Eindrückrichtung ergibt sich vielmehr ein Kraftgleichgewicht, welches sich zwischen der Federvorrichtung und der entsprechenden Federkraft und der Einwirkung durch die zweite Klemmbacke einstellt.

Weiter ist es von Vorteil, wenn bei einer erfindungsgemäßen Bodensiegelstation die Klemmvorrichtung als obere Klemmvorrichtung ausgebildet ist, welche in Transportrichtung der Folienbahn vor der Siegelvorrichtung angeordnet ist. Dies führt dazu, dass üblicherweise bei einer Bodensiegelstation die Transportrichtung in Schwerkraftrichtung von oben nach unten vorliegt. Die Folienbahn wird also von oben nach unten in die Bodensiegelstation, z. B. mithilfe eines Vorzugsantriebs, eingebracht. Dementsprechend erreicht die Folienbahn zuerst die als obere Klemmvorrichtung ausgebildete Klemmvorrichtung und anschließend die Siegelvorrichtung. Dies führt dazu, dass durch die erfindungsgemäße Bewegung der Klemmvorrichtung und damit ein Verschwenken der Folienbahn der nach unten herabhängende Teil der Folienbahn durch die Schwerkraftsituation automatisch mit in die seitliche Bewegung einschwenkt. Durch die Schwerkraft wird also die Folienbahn noch leichter mitgenommen. Die Transportrichtung der Folienbahn ist dabei an jeder Stelle der Folienbahn diejenige Richtung, die beim Vorschub der Folienbahn eingeschlagen wird. Sie kann z. B. durch die Schwerkraft, wie im vorliegenden Ausführungsbeispiel, aber auch durch Rollen vorgegeben sein.

Ebenfalls von Vorteil ist es, wenn bei einer erfindungsgemäßen Bodensiegelstation zumindest eine weitere Klemmvorrichtung in Transportrichtung der Folienbahn der Siegelvorrichtung nachgeordnet angeordnet und als untere Klemmvorrichtung ausgebildet ist. Somit können zwei Klemmvorrichtungen vorgesehen sein, welche sozusagen um die Siegelvorrichtung herum angeordnet sind. Dabei werden vorzugsweise eine obere Klemmvorrichtung zuerst und die untere Klemmvorrichtung als zweites geschlossen, um eine definierte Einspannsituation mit ausreichender Zugspannung der Folienbahn für den Siegelprozess zur Verfügung zu stellen. Selbstverständlich kann die untere Klemmvorrichtung in einem bevorzugten Ausführungsbeispiel gleich ausgebildet sein, wie die erfindungsgemäße Klemmvorrichtung, also insbesondere die obere Klemmvorrichtung. Jedoch ist es auch möglich, dass bei der unteren Klemmvorrichtung die erste Klemmbacke den gleichen Abstand zur Folienbahn aufweist wie die erste Siegelbacke. Somit wird durch die obere Klemmvorrichtung die Folienbahn nicht nur an die erste Siegelbacke, sondern auch an die erste Klemmbacke der unteren Klemmvorrichtung herangeführt. Werden untere und obere Klemmvorrichtung in erfindungsgemäßer Weise ausgebildet, so erfolgt in definierter Weise sozusagen ein paralleles Verschieben der Folienbahn und damit eine noch definierte Anordnung derselben relativ zur Siegelvorrichtung.

Vorteilhaft ist es darüber hinaus, wenn bei einer erfindungsgemäßen Bodensiegelstation die Siegelvorrichtung eine Schneidvorrichtung aufweist für das Schneiden der Folienbahn unter der Bodensiegelnaht. Das bedeutet, dass im gemeinsamen Schritt mit Erzeugen der Bodensiegelnaht auch ein Ablängen der Folienbahn in einzelne Sackabschnitte erfolgen kann. Damit kann durch die Positionierung der Schneidvorrichtung der Überstand zwischen Bodensiegelnaht und tatsächlichem Ende des jeweiligen sich nach oben erstreckenden Sackabschnitts definiert werden. Als Schneidvorrichtung kann z. B. ein scharfes Messer angeordnet sein, welches die Folienbahn auf gesamter Länge durchschneidet. Damit wird die Schneidvorrichtung gleichzeitig vorzugsweise mit der zweiten Siegelbacke bewegbar oder ist sogar an dieser befestigt. Die Kompaktheit der gesamten Bodensiegelstation wird damit trotz Erhöhung der Funktionalität nicht beeinträchtigt, sondern beibehalten.

Vorteilhaft ist es weiter, wenn bei einer erfindungsgemäßen Bodensiegelstation die Federvorrichtung eine Auslösevorrichtung aufweist, welche bei klemmender Position der ersten Klemmbacke diese in dieser Position sichert und aktiv die Federkraft unabhängig von der zweiten Klemmbacke freigeben kann. Dies kann z. B. durch eine Schnapprastausbildung gewährleistet werden, sodass beim Klemmen der Klemmvorrichtung sich die erste Klemmbacke gemeinsam mit der zweiten Klemmbacke seitlich mit der Folienbahn verschiebt. Bei dieser Verschiebung rastet die Auslösevorrichtung ein und sichert die erste Klemmbacke trotz der sich durch diese Bewegung erhöhten Federkraft der Federvorrichtung in dieser Position. Bewegt sich nun die zweite Klemmbacke zurück, verbleibt die erste Klemmbacke in dieser mit der Federvorrichtung vorgespannten Position. Ist eine Verklebesituation zwischen der ersten Siegelbacke und der Folienbahn vorliegend, so kann die Folienbahn nicht mehr beliebig zurückschwenken, wenn sich die zweite Klemmbacke zurückbewegt hat. Anschließend wird die Auslösevorrichtung aktiviert, sodass die erste Klemmbacke nun mit erhöhter Beschleunigung und vorzugsweise auch mit erhöhter Endgeschwindigkeit die gesicherte Position verlässt. Somit wird ein stärkerer Impuls zum Lösen potentieller Verklebungen zwischen Folienbahn und erster Siegelbacke zur Verfügung gestellt. Auch kann bereits während der Durchführung der Siegelung ein Zurückstellen der zweiten Klemmbacke erfolgen, ohne eine Beeinträchtigung des Siegelvorgangs durch erhöhten Zug zur Verfügung zu stellen. Damit wird eine Beschleunigung des Taktes und damit eine höhere Geschwindigkeit der gesamten Rückstellung möglich.

Vorteilhaft ist es darüber hinaus, wenn bei einer erfindungsgemäßen Bodensiegelstation die erste Klemmbacke und/oder die zweite Klemmbacke für die Kontaktierung der Folienbahn zumindest an einer Seite abgerundete Kanten aufweisen. Wie bereits erläutert worden ist, wird durch die Klemmvorrichtung eine seitliche Verschiebebewegung der Folienbahn in Teilabschnitten durchgeführt. Damit ergibt sich ein seitlicher Versatz, welcher jedoch nur von dem Abschnitt der Folienbahn vollzogen wird, welcher sich zwischen der Klemmvorrichtung und der Siegelvorrichtung befindet. Der darüber angeordnete Rest der Folienbahn verbleibt auf der Förderstrecke, sodass sich dieser Versatz durch eine S-förmige Ausbildung der Folienbahn bemerkbar macht. Um sicherzustellen, dass hier kein Abknicken oder unerwünschtes mechanisches Einwirken auf die Folienbahn erfolgt, kann der entsprechende Abschnitt der Klemmbacke mit einer abgerundeten Kante ausgebildet sein. Damit wird eine mechanische Belastung für die Folienbahn reduziert und insbesondere ein Abknicken oder ein Überstrecken der Folienbahn verhindert.

Erfindungsgemäß ist es weiter von Vorteil, wenn bei einer erfindungsgemäßen Bodensiegelstation die erste Klemmbacke und/oder die zweite Klemmbacke einen Kühlkanal für das Ausblasen von Kühlfluid in Richtung der Siegelvorrichtung auf die Folienbahn aufweisen. Unter Kühlfluid ist insbesondere Kühlluft oder Umgebungsluft zu verstehen. Damit werden nach Beenden des Siegelvorgangs eine weitere Beschleunigung des Verfahrens und eine Reduktion der Taktzeit ermöglicht. Der Kühlkanal ist dabei vorzugsweise jeweils schräg nach unten auf die Siegelvorrichtung bzw. auf die entstandene Bodensiegelnaht der Folienbahn zu ausgerichtet.

Ebenfalls Gegenstand der vorliegenden Erfindung ist ein Verfahren für die Herstellung einer Bodensiegelnaht in einer Folienbahn in einer Sackfüllanlage mit einer Bodensiegelstation, insbesondere ausgebildet gemäß der vorliegenden Erfindung, aufweisend die folgenden Schritte:
- Fördern der Folienbahn in die Bearbeitungsposition,
- Schließen einer Klemmvorrichtung durch Bewegung einer zweiten Klemmbacke gegen eine erste Klemmbacke und mit der ersten Klemmbacke gegen eine Federvorrichtung zur Auslenkung der Folienbahn aus der Förderstrecke,
- Schließen einer Siegelstation durch Bewegung einer zweiten Siegelbacke gegen die erste Siegelbacke,
- Durchführen des Siegelvorgangs,
- Öffnen der Siegelvorrichtung,
- Öffnen der Klemmvorrichtung.

Insbesondere das Öffnen der Klemmvorrichtung erfolgt, wie dies bereits ausführlich zur erfindungsgemäßen Bodensiegelstation erläutert worden ist. Beim Öffnen wirkt also die Federvorrichtung als Krafteinwirkung auf die Folienbahn ein, um eine aktive Wegbewegung der Folienbahn von der ersten Siegelbacke zur Verfügung zu stellen. Potentielle Verklebungen zwischen Folienbahn und erster Siegelbacke werden auf diese Weise reduziert bzw. aufgehoben. Das erfindungsgemäße Verfahren bringt insbesondere durch die Korrelation mit einer erfindungsgemäßen Bodensiegelstation die gleichen Vorteile mit sich, wie sie ausführlich mit Bezug auf eine erfindungsgemäße Bodensiegelstation erläutert worden sind.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und der Beschreibung erwähnten Merkmale jeweils einzeln für sich oder in beliebiger Kombination erfindungswesentlich sein. Es zeigen schematisch:
- Fig. 1: eine erste Ausführungsform einer erfindungsgemäßen Sackfüllanlage,
- Fig. 2: eine Ausführungsform einer erfindungsgemäßen Bodensiegelstation zu Beginn des Siegelvorgangs,
- Fig. 3: die Ausführungsform der Figur 2 in einem nächsten Schritt,
- Fig. 4: die Ausführungsform der Figur 3 in einem nächsten Schritt,
- Fig. 5: die Ausführungsform der Figur 4 in einem nächsten Schritt,
- Fig. 6: die Ausführungsform der Figur 5 in einem nächsten Schritt,
- Fig. 7: die Ausführungsform der Figur 6 in einem nächsten Schritt,
- Fig. 8: die Ausführungsform der Figur 7 in einem nächsten Schritt,
- Fig. 9: die Ausführungsform der Figur 8 in einem nächsten Schritt,
- Fig. 10: eine weitere Ausführungsform einer Klemmvorrichtung einer erfindungsgemäßen Bodensiegelstation und
- Fig. 11: die Ausführungsform der Figur 10 bei geschlossener Klemmvorrichtung.

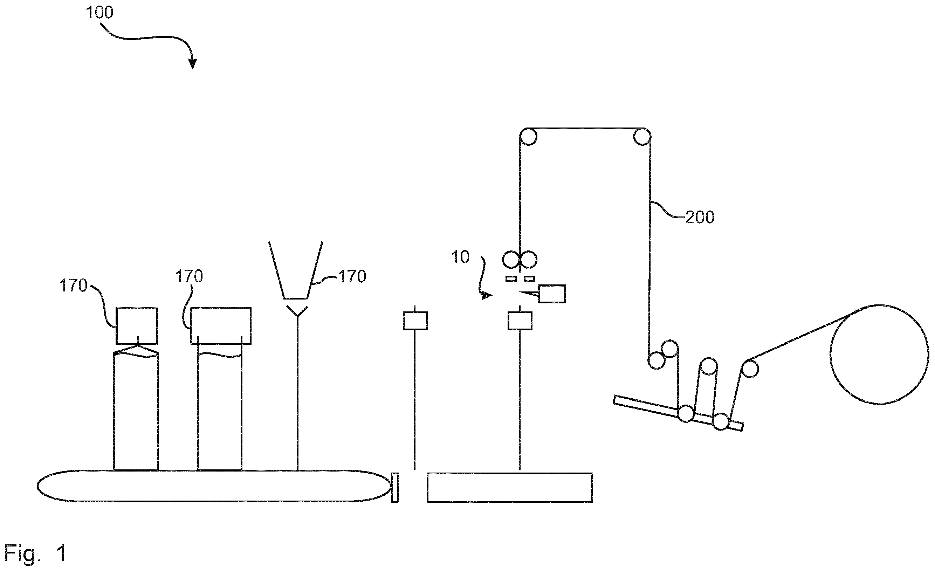

In Figur 1 ist schematisch eine Ausführungsform einer erfindungsgemäßen Sackfüllanlage 100 dargestellt. Ausgehend rechts von einer Vorlagerolle wird kontinuierlich eine Folienbahn 200 abgerollt. Die Folienbahn 200 wird über eine Puffervorrichtung, welche hier als Tänzervorrichtung ausgebildet ist, in einen schubweisen Vorschub überführt. Über zwei Vorzugswalzen als Vorzugsantriebe wird eine erfindungsgemäße Bodensiegelstation 10 erreicht. Diese dient zum Siegeln der Bodensiegelnaht 210 sowie zum Ablängen einzelner Sackabschnitte. Die einzelnen Sackabschnitte werden über Greiferarme, z. B. im Pendelbetrieb, in Figur 1 nach links weitergeführt und mit einer weiteren Station 170 durch einen Fülltrichter mit Schüttgut gefüllt. Die vorletzte Station 170 dient zum Siegeln einer Kopfnaht und damit zum Verschließen des gefüllten Sackabschnitts. Als letzte Station 170 ganz links ist eine Kühlvorrichtung für die gesiegelte Kopfnaht vorgesehen, um den gefüllten Sack zu finalisieren.

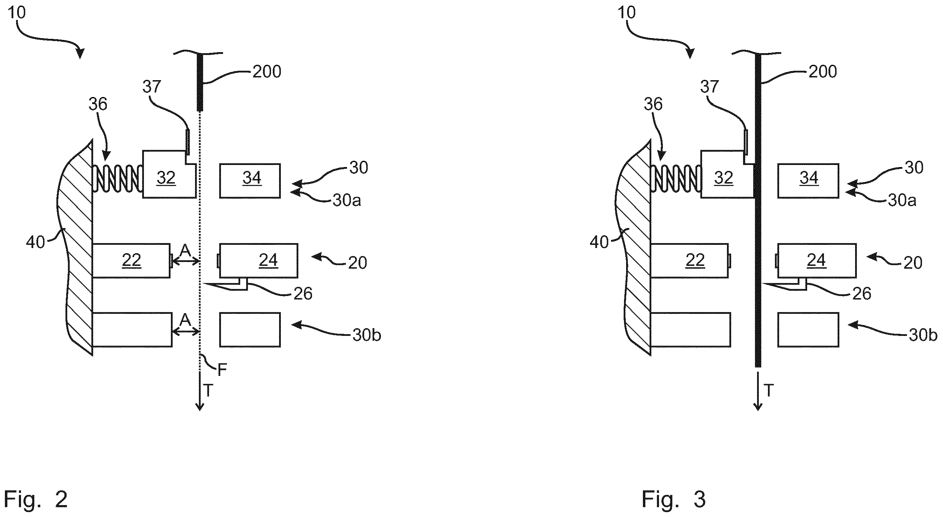

Die Figuren 2 bis 9 beschreiben und zeigen schematisch, wie ein Verfahren bei einer erfindungsgemäßen Bodensiegelstation 10 durchgeführt werden kann. In Figur 2 ist gut zu erkennen, dass eine Förderstrecke F mit gepunkteter Linie, insbesondere auch durch die Schwerkraft, von oben nach unten vorgesehen ist. Dies ist damit deckungsgleich mit der Transportrichtung T der Folienbahn 200. Wird die Folienbahn 200 in die Bodensiegelstation 10 eingeführt, so folgt sie der Förderstrecke F entlang der Transportrichtung T.

Die Ausführungsform der Bodensiegelstation 10 gemäß der Figuren 2 bis 9 ist mit einer oberen Klemmvorrichtung 30a als erfindungsgemäße Klemmvorrichtung 30 und einer stationären unteren Klemmvorrichtung 30b ausgestaltet. Dazwischen befindet sich eine Siegelvorrichtung 20.

Wie ebenfalls der Figur 2 gut zu entnehmen ist, handelt es sich bei der ersten Siegelbacke 22 um eine stationäre Anordnung relativ zum Stationsrahmen 40. Ausschließlich die rechts angeordnete zweite Siegelbacke 24, welche auch eine Schneidvorrichtung 26 aufweist, ist bewegbar auf die erste Siegelbacke 22 hin angeordnet.

Die Klemmvorrichtung 30 als obere Klemmvorrichtung 30a ist mit einer links angeordneten ersten Klemmbacke 32 ausgebildet, welche mit einer Federkraft durch eine Federvorrichtung 36 beaufschlagt wird. Rechts ist die bewegbare zweite Klemmbacke 34 angeordnet. Nachfolgend wird eine erfindungsgemäße Durchführung einer Erzeugung einer Bodensiegelnaht mit einer erfindungsgemäßen Bodensiegelstation erläutert.

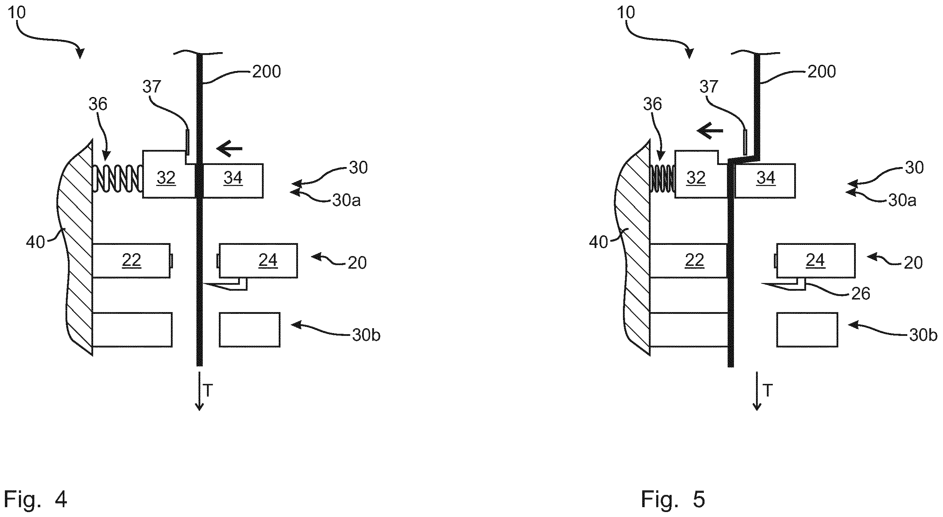

Zuerst bewegt sich die Folienbahn 200 in die Bodensiegelstation 10 hinein, wie dies die Figur 3 zeigt. Anschließend schließt die Klemmvorrichtung 30, wobei ein erster Schritt des Schließvorgangs in Figur 4 gezeigt ist. Beim Bewegen der zweiten Klemmbacke 34 gerät diese in Kontakt mit der Folienbahn 200 und kann anschließend durch Weiterbewegung entlang der Pfeilrichtung nach links sowohl die Folienbahn 200 als auch die erste Klemmbacke 32 nach links mitbewegen. Dabei erfolgt eine seitliche Verschiebung der Folienbahn 200 nach links und damit eine Auslenkung von der ursprünglichen Förderstrecke F. Dies geschieht unter Erhöhung der Federkraft und durch Zusammenpressen der Federvorrichtung 36. Wie der Figur 5 ebenfalls gut zu entnehmen ist, wird durch diese seitliche Verschiebung der Folienbahn 200 ein Kontakt derselben mit der stationären ersten Siegelbacke 22 wie auch der unteren linken Backe der unteren Klemmvorrichtung 30b erreicht.

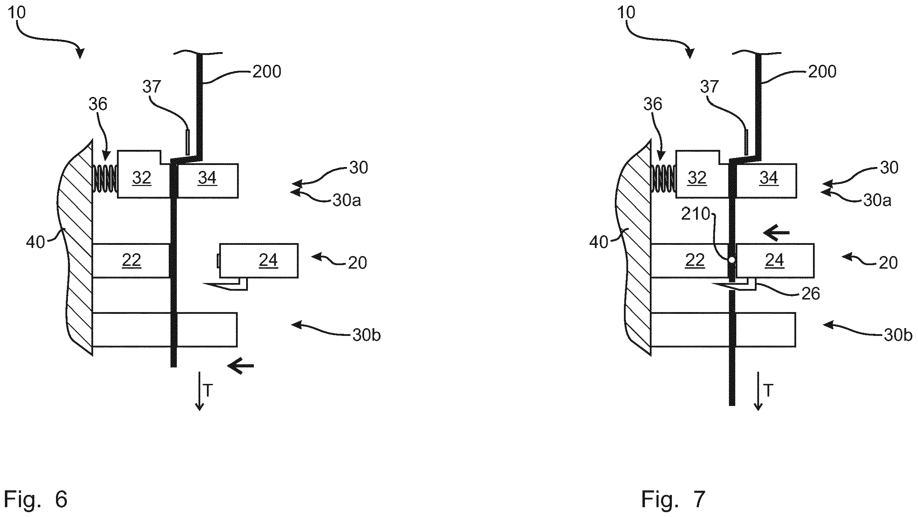

In Figur 6 wird für eine ausreichende Zugspannung bei der unteren Klemmvorrichtung 30b die rechte Klemmbacke geschlossen und damit eine definierte Positionierung der Folienbahn 200 erreicht. Anschließend wird, wie dies Figur 7 zeigt, die Siegelvorrichtung 20 geschlossen, indem die rechts angeordnete zweite Siegelbacke 24 komplett nach links schließt. Durch Erhitzen der jeweiligen Siegelbacken 22 und 24 wird die Bodensiegelnaht 210 erzeugt. Durch die gemeinsame Bewegung mit der zweiten Siegelbacke 24 wird durch die Schneidvorrichtung 26 ein Ablängen und damit ein Schneiden unterhalb der Bodensiegelnaht 210 erzielt.

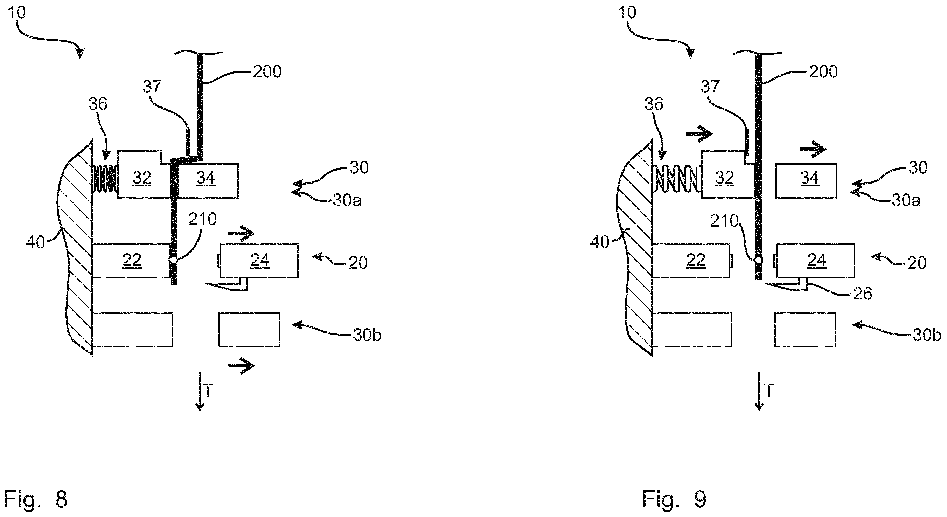

Anschließend erfolgt das Öffnen der erfindungsgemäßen Bodensiegelstation 10, wobei die untere Klemmvorrichtung 30b sowie die Siegelvorrichtung 20 öffnen, wie dies Figur 8 zeigt. Abschließend öffnet auch die obere Klemmvorrichtung 34, wobei durch das Bewegen der zweiten Klemmbacke 34 nach rechts sich die Federvorrichtung 36 entspannt. Damit wird auch der Rest der Folienbahn 200 wieder zurück auf die Förderstrecke F bewegt und ein Zug auf eine entsprechende Verklebesituation zwischen der ersten Siegelbacke 22 und der Folienbahn 200 erzeugt. Eine solche Verklebung reißt auf, sodass die Situation gemäß Figur 9 trotz stationärer erster Siegelbacke 22 mit hoher Sicherheit erreicht werden kann.

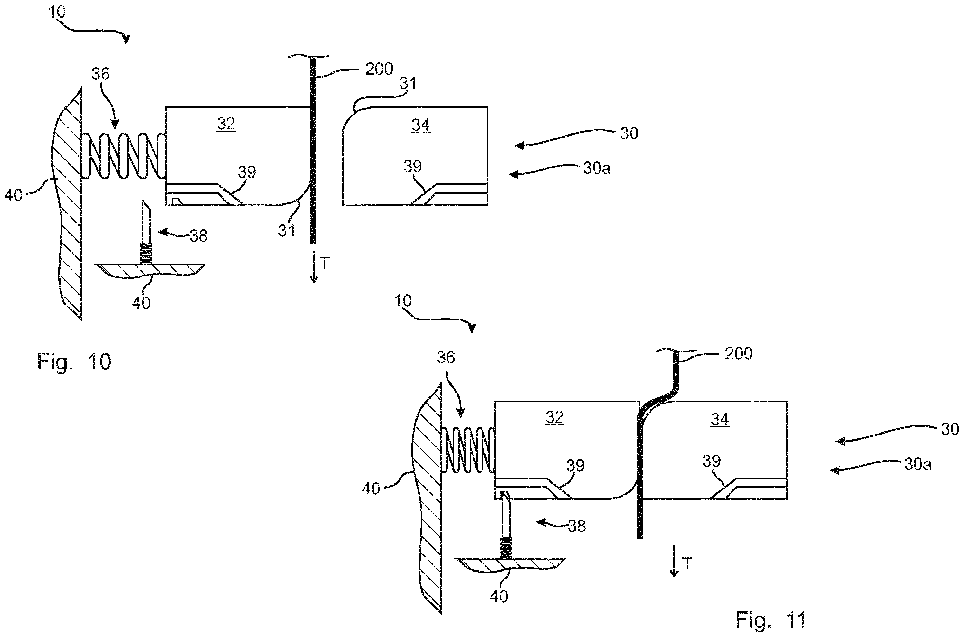

In den Figuren 10 und 11 ist schematisch eine vorteilhafte Ausgestaltung einer Klemmvorrichtung 30 als obere Klemmvorrichtung 30a dargestellt. So ist bei dieser Ausführungsform der Bodensiegelstation 10 eine Ausbildung von abgerundeten Kanten 31 für beide Klemmbacken 32 und 34 vorgesehen. Wie im geschlossenen Zustand gemäß Figur 11 zu erkennen ist, wird auf diese Weise ein verbessertes Anschmiegen der Folienbahn 200 in gerade diese abgerundete Kante 31 möglich. Mechanische Beeinflussung, insbesondere Abknicken oder Überstrecken der Folienbahn 200, wird auf diese Weise optimiert vermieden. Auch ist in den Figuren 10 und 11 eine Lösung einer verbesserten Kühlung zu erkennen. So sind in den beiden Klemmbacken 32 und 34 Kühlkanäle 39 vorgesehen, welche in schräger Weise Kühlfluid auf die Folienbahn 200 lenken können. Eine erzeugte Bodensiegelnaht 210 wird auf diese Weise verstärkt gekühlt, sodass die Taktsituation verbessert und damit die Produktionsgeschwindigkeit der Sackfüllanlage 100 erhöht werden kann.

Zuletzt zeigen die Figuren 10 und 11 in dieser Ausführungsvariante der Bodensiegelstation 10 eine Auslösevorrichtung 38. Diese rastet ebenfalls mit einer Feder gesichert ein, wenn sich die erste Klemmbacke 32 komplett nach links bewegt hat und sichert damit die gesteigerte Federkraft in der Federvorrichtung 36. Anschließend kann trotz einer Bewegung der zweiten Klemmbacke 34 nach rechts die erste Klemmbacke 32 noch in der gesicherten Position verbleiben. Durch Abziehen der Auslösevorrichtung 38 kann eine schlagartige Beschleunigung der ersten Klemmbacke 32 und damit ein erhöhter Impuls auf die Folienbahn 200 ausgebracht werden.

Die voranstehende Erläuterung der Ausführungsbeispiele beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 10: Bodensiegelstation
- 20: Siegelvorrichtung
- 22: erste Siegelbacke
- 24: erste Siegelbacke
- 26: Schneidvorrichtung
- 30: Klemmvorrichtung
- 30a: obere Klemmvorrichtung
- 30b: untere Klemmvorrichtung
- 31: abgerundete Kante
- 32: erste Klemmbacke
- 34: zweite Klemmbacke
- 36: Federvorrichtung
- 37: Anschlagsvorrichtung
- 38: Auslösevorrichtung
- 39: Kühlkanal
- 40: Stationsrahmen

- 100: Sackfüllanlage
- 170: Station

- 200: Folienbahn
- 210: Bodensiegelnaht

- A: Abstand zur Folienbahn
- T: Transportrichtung der Folienbahn
- F: Förderstrecke

## Patentansprüche

1. Sackfüllanlage (100) mit einer Bodensiegelstation (10) für die Erzeugung einer Bodensiegelnaht (210) in einer Folienbahn (200), aufweisend eine Siegelvorrichtung (20) und zumindest eine Klemmvorrichtung (30),
wobei die Siegelvorrichtung (20) eine stationäre erste Siegelbacke (22) und eine relativ zur ersten Siegelbacke (22) bewegbare zweite Siegelbacke (24) aufweist, und dass die Klemmvorrichtung (30) eine bewegbare erste Klemmbacke (32) und eine bewegbare zweite Klemmbacke (34) für das Klemmen der Folienbahn (200) aufweist, wobei eine Federvorrichtung (36) die erste Klemmbacke (32) in Richtung der zweiten Klemmbacke (34) mit einer Federkraft beaufschlagt und die erste Klemmbacke (32) näher an der Folienbahn (200) positioniert als die erste Siegelbacke (210) angeordnet ist **dadurch gekennzeichnet, dass** die Sackfüllanlage so konfiguriert ist, dass durch Bewegung der zweiten Klemmbacke (34) gegen die erste Klemmbacke (32) und mit der ersten Klemmbacke (32) gegen die Federvorrichtung (36) die Folienbahn (200) aus der Förderstrecke (F) gelenkt wird.

2. Sackfüllanlage (100) nach Anspruch 1,
**dadurch gekennzeichnet,**
**dass** die Bodensiegelstation (10) einen Stationsrahmen (40) aufweist, an welchem die erste Siegelbacke (22) stationär befestigt ist, die zweite Siegelbacke (24) bewegbar gelagert ist, die Federvorrichtung (36) sich abstützt, die erste Klemmbacke (32) bewegbar gelagert ist und/oder die zweite Klemmbacke (34) bewegbar gelagert ist.

3. Sackfüllanlage (100) nach einem der vorangegangenen Ansprüche,
**dadurch gekennzeichnet,**
**dass** die Bewegbarkeit der zweiten Siegelbacke (24), der ersten Klemmbacke (32) und/oder der zweiten Klemmbacke (34) translatorisch oder im Wesentlichen translatorisch ausgebildet ist.

4. Sackfüllanlage (100) nach einem der vorangegangenen Ansprüche,
**dadurch gekennzeichnet,**
**dass** die Federvorrichtung (36) eine Anschlagsvorrichtung (37) mit wenigstens einem Anschlag (37a, 37b) für die Begrenzung der Bewegung der ersten Klemmbacke (32) aufweist.

5. Sackfüllanlage (100) nach einem der vorangegangenen Ansprüche,
**dadurch gekennzeichnet,**
**dass** die Klemmvorrichtung (30) als obere Klemmvorrichtung (30a) ausgebildet ist, welche in Transportrichtung (T) der Folienbahn (200) vor der Siegelvorrichtung (20) angeordnet ist.

6. Sackfüllanlage (100) nach einem der vorangegangenen Ansprüche,
**dadurch gekennzeichnet,**
**dass** zumindest eine weitere Klemmvorrichtung (30) in Transportrichtung (T) der Folienbahn (200) der Siegelvorrichtung (20) nachgeordnet angeordnet und als untere Klemmvorrichtung (30b) ausgebildet ist.

7. Sackfüllanlage (100) nach einem der vorangegangenen Ansprüche,
**dadurch gekennzeichnet,**
**dass** die Siegelvorrichtung (20) eine Schneidvorrichtung (26) aufweist für das Schneiden der Folienbahn (200) unter der Bodensiegelnaht (210).

8. Sackfüllanlage (100)) nach einem der vorangegangenen Ansprüche,
**dadurch gekennzeichnet,**
**dass** die Federvorrichtung (36) eine Auslösevorrichtung (38) aufweist, welche bei klemmender Position der ersten Klemmbacke (32) diese in dieser Position sichert und aktiv die Federkraft unabhängig von der zweiten Klemmbacke (34) freigeben kann.

9. Sackfüllanlage (100) nach einem der vorangegangenen Ansprüche,
**dadurch gekennzeichnet,**
**dass** die erste Klemmbacke (32) und/oder die zweite Klemmbacke (34) für die Kontaktierung der Folienbahn (200) zumindest an einer Seite abgerundete Kanten (31) aufweisen.

10. Sackfüllanlage (100) nach einem der vorangegangenen Ansprüche,
**dadurch gekennzeichnet,**
**dass** die erste Klemmbacke (32) und/oder die zweite Klemmbacke (34) einen Kühlkanal (39) für das Ausblasen von Kühlfluid in Richtung der Siegelvorrichtung (20) auf die Folienbahn (200) aufweisen.

11. Verfahren für die Herstellung einer Bodensiegelnaht (210) in einer Folienbahn (200) in einer Sackfüllanlage (100) aufweisend die Merkmale eines der Ansprüche 1 bis 10, aufweisend die folgenden Schritte:
- Fördern der Folienbahn (200) in die Bearbeitungsposition,
- Schließen einer Klemmvorrichtung (30) durch Bewegung einer zweiten Klemmbacke (34) gegen eine erste Klemmbacke (32) und mit der ersten Klemmbacke (32) gegen eine Federvorrichtung (36) zur Auslenkung der Folienbahn (200) aus der Förderstrecke (F),
- Schließen einer Siegelstation (20) durch Bewegung einer zweiten Siegelbacke (24) gegen eine erste Siegelbacke (22),
- Durchführen des Siegelvorgangs,
- Öffnen der Siegelvorrichtung (20),
- Öffnen der Klemmvorrichtung (30).

## Claims

1. A bag filling system (100) with a base sealing station (10) for generating a base seal seam (210) in a film web (200), having a sealing device (20) and at least one clamping device (30),
wherein the sealing device (20) has a first stationary sealing jaw (22) and a second sealing jaw (24) which can be moved relative to the first sealing jaw (22), and that the clamping device (30) has a first movable clamping jaw (32) and a second movable clamping jaw (34) for clamping the film web (200), wherein a spring device (36) applies a spring force to the first clamping jaw (32) in the direction of the second clamping jaw (34), and the first clamping jaw (32) is arranged positioned closer to the film web (200) than the first sealing jaw (210),
**characterized in**
**that** the bag filling system is configured such that the film web (200) is directed out of the conveyor path (F) by movement of the second clamping jaw (34) against the first clamping jaw (32) and with the first clamping jaw (32) against the spring device (36).

2. A bag filling system (100) according to Claim 1,
**characterized in**
**that** the base sealing station (10) has a station frame (40), to which the first sealing jaw (22) is fastened in a stationary manner, the second sealing jaw (24) is movably mounted, the spring device (36) is supported, the first clamping jaw (32) is movably mounted and/or the second clamping jaw (34) is movably mounted.

3. A bag filling system (100) according to any one of the preceding claims,
**characterized in**
**that** the movability of the second sealing jaw (24), the first clamping jaw (32) and/or the second clamping jaw (34) is designed to be translational or substantially translational.

4. A bag filling system (100) according to any one of the preceding claims,
**characterized in**
**that** the spring device (36) has a stop device (37) with at least one stop (37a, 37b) for limiting the movement of the first clamping jaw (32).

5. A bag filling system (100) according to any one of the preceding claims,
**characterized in**
**that** the clamping device (30) is designed as an upper clamping device (30a), which is arranged in the transport direction (T) of the film web (200) before the sealing device (20).

6. A bag filling system (100) according to any one of the preceding claims,
**characterized in**
**that** at least one further clamping device (30) is arranged in the transport direction (T) of the film web (200) downstream of the sealing device (20) and is designed as a lower clamping device (30b).

7. A bag filling system (100) according to any one of the preceding claims,
**characterized in**
**that** the sealing device (200) has a cutting device (26) for cutting the film web (200) under the base sealing seam (210).

8. A bag filling system (100) according to any one of the preceding claims,
**characterized in**
**that** the spring device (36) has a release device (38), which in the clamping position of the first clamping jaw (32) secures the latter in said positon and can actively release the spring force independently of the second clamping jaw (34)

9. A bag filling system (100) according to any one of the preceding claims,
**characterized in**
**that** first clamping jaw (32) and/or the second clamping jaw (34) have edges (31) rounded at least on one side for contacting the film web (200).

10. A bag filling system (100) according to any one of the preceding claims,
**characterized in**
**that** the first clamping jaw (32) and/or the second clamping jaw (34) has a cooling channel (39) for blowing out cooling fluid onto the film web (200).

11. A method for producing a base sealing seam (210) in a film web (200) in a bag filling system (100) having the features of any one of Claims 1 to 10, having the following steps:
- Conveying the film web (200) into the processing position,
- Closing a clamping device (30) by movement of a second clamping jaw (34) against a fist clamping jaw (32) and with the first clamping jaw (32) against a spring device (36) for deflection of the film web (200) out of the conveyor path (F),
- Closing a sealing station (20) by movement of a second sealing jaw (24) against a first sealing jaw (22),
- Performing a sealing process,
- Opening the sealing device (20),
- Opening the clamping device (30).

## Revendications

1. Installation de remplissage de sacs (100) avec une station de scellement de fonds (10) pour la réalisation d'un cordon de scellement de fond (210) dans une bande de film (200), comprenant un dispositif de scellement (20) et au moins un dispositif de serrage (30),
le dispositif de scellement (20) comprenant une première mâchoire de scellement (22) fixe et une deuxième mâchoire de scellement (24) mobile par rapport à la première mâchoire (22) et le dispositif de scellement (30) comprenant une première mâchoire de serrage mobile (32) et une deuxième mâchoire de serrage mobile (34) pour le serrage de la bande de film (200), un dispositif à ressort (36) sollicitant la première mâchoire de serrage (32) en direction de la deuxième mâchoire de serrage (34) avec une force élastique et la première mâchoire de serrage (32) étant positionnée plus près de la bande de film (200) que la première mâchoire de scellement (210),
**caractérisée en ce que**
l'installation de remplissage de sacs est conçue de façon à ce que, le déplacement de la deuxième mâchoire de serrage (34) contre la première mâchoire de serrage (32) et avec la première mâchoire de serrage (32) contre le dispositif à ressort (36) permet de guider la bande de film (200) hors du trajet de convoyage (F).

2. Installation de remplissage de sacs (100) selon la revendication 1,
**caractérisée en ce que**
la station de scellement de fond (10) comprend un châssis de station (40) auquel la première mâchoire de scellement (22) est fixée de manière stationnaire, au niveau duquel la deuxième mâchoire de scellement (24) est logée de manière mobile, contre lequel le dispositif à ressort (36) s'appuie, au niveau duquel la première mâchoire de serrage (32) est logée de manière mobile et/ou la deuxième mâchoire de serrage (34) est logée de manière mobile.

3. Installation de remplissage de sacs (100) selon l'une des revendications précédentes,
**caractérisée en ce que**
la mobilité de la deuxième mâchoire de scellement (24), de la première mâchoire de serrage (32) et/ou de la deuxième mâchoire de serrage (34) est une mobilité en translation ou globalement en translation.

4. Installation de remplissage de sacs (100) selon l'une des revendications précédentes,
**caractérisée en ce que**
le dispositif à ressort (36) comprend un dispositif de butée (37) avec au moins une butée (37a, 37b) pour la limitation du déplacement de la première mâchoire de serrage (32).

5. Installation de remplissage de sacs (100) selon l'une des revendications précédentes,
**caractérisée en ce que**
le dispositif de serrage (30) est conçu comme un dispositif de serrage supérieur (30a), qui est disposé devant le dispositif de scellement (20) dans la direction de transport (T) de la bande de film (200).

6. Installation de remplissage de sacs (100) selon l'une des revendications précédentes,
**caractérisée en ce que**
au moins un autre dispositif de serrage (30) est disposé en aval du dispositif de scellement (20) dans la direction de transport (T) de la bande de film (200) et est conçu comme un dispositif de serrage inférieur (30b).

7. Installation de remplissage de sacs (100) selon l'une des revendications précédentes,
**caractérisée en ce que**
le dispositif de scellement (20) comprend un dispositif de coupe (26) pour la découpe de la bande de film (200) sous le cordon de scellement du fond (210).

8. Installation de remplissage de sacs (100) selon l'une des revendications précédentes,
**caractérisée en ce que**
le dispositif à ressort (36) comprend un dispositif de déclenchement (38) qui, dans une position de serrage de la première mâchoire de serrage (32), sécurise celle-ci dans cette position et peut libérer activement la force élastique indépendamment de la deuxième mâchoire de serrage (34).

9. Installation de remplissage de sacs (100) selon l'une des revendications précédentes,
**caractérisée en ce que**
la première mâchoire de serrage (32) et/ou la deuxième mâchoire de serrage (34) comprennent, pour la mise en contact de la bande de film (200), des arêtes (31) arrondies au moins sur un côté.

10. Installation de remplissage de sacs (100) selon l'une des revendications précédentes,
**caractérisée en ce que**
la première mâchoire de serrage (32) et/ou la deuxième mâchoire de serrage (34) comprennent un canal de refroidissement pour le soufflage d'un fluide de refroidissement en direction du dispositif de scellement (20) sur la bande de film (200).

11. Procédé de réalisation d'un cordon de scellement de fond (210) dans une bande de film (200) dans une installation de remplissage de sacs (100) présentant les caractéristiques d'une des revendications 1 à 10, comprenant les étapes suivantes :
- convoyage de la bande de film (200) vers la position de traitement,
- fermeture d'un dispositif de serrage (30) par le déplacement d'une deuxième mâchoire de serrage (34) contre une première mâchoire de serrage (32) et avec la la première mâchoire de serrage (32) contre un dispositif à ressort (36) pour la déviation de la bande de film (200) hors du trajet de convoyage (F),
- fermeture d'une station de scellement (20) par le déplacement d'une deuxième mâchoire de scellement (24) contre une première mâchoire de scellement (22),
- réalisation du processus de scellement,
- ouverture du dispositif de scellement (20),
- ouverture du dispositif de serrage (30).
